# EUROPEAN PATENT SPECIFICATION

(11) **EP 2 582 207 B1**
(45) Date of publication and mention of the grant of the patent: **09.07.2014**
(21) Application number: 11184490.8
(22) Date of filing: 10.10.2011
(51) Int. Cl.: H05B 37/00, H05B 33/08, B64F 1/20

(54) **LED-airfield light**
LED-Rollfeldlicht
Lumière DEL de piste d'aviation

(43) Date of publication of application: 17.04.2013
(73) Proprietor: Hella KGaA Hueck & Co, 59552 Lippstadt (DE)
(72) Inventor: Rupprath, Bernhard, 59556 Lippstadt (DE); Decius, Nikolaus, 59558 Lippstadt (DE); Schmitz, Klaus-Peter, 59558 Lippstadt (DE)
(74) Representative: Lohr, Georg

(56) References cited:
- EP-A2- 1 722 600
- EP-A2- 2 348 795
- WO-A1-2008/073322
- US-A1- 2006 050 507
- US-A1- 2011 080 097

## Description

### Field of the invention

The invention relates to LED-airfield lights, such as e.g. runway lights or taxiway lights with a heater for e.g. deicing the LED-airfield lights and a method for operating lights.

### Description of the related art

On airfields in-pavement lights are used in particular for runway lighting and taxiway lighting. Such lights must emit a predefined luminosity even under harsh climatic conditions, like ice or snow. When using incandescent light sources like halogen bulb lamps the heat of the lamps is sufficient for deicing the light exit of the light. If, however, more efficient light sources like LEDs are used, the thermal losses are not sufficient for a reliable deicing of the light exits.

DE 10 2009 006 220 A1 discloses a car lamp with LEDs as light sources. For reliable deicing of the car lamp additional heating elements are arranged in parallel to the LEDs. The heating is activated by a switch if the temperature drops below a predefined temperature and stopped if the temperature rises above a second predefined temperature.

US 6,191,541 B1 discloses an aircraft tail light. A heating element maintains the light's temperature above a minimum temperature. The heating element is controlled by a thermal switch.

US2011/0080097A1 discloses a LED airfield light with a heater and a LED being positioned in a housing. The power level of the LED is controlled by a controlling unit comprising a microcontroller that provides a pulsewidth modulated signal to control the intensity of the light and thus the power level of the LED. The heater is connected in series with the LED and the heater is controlled by a thermostat, being coupled in parallel to the heater, means the same amount of current is be provided to the light whether the heater is on or off. Operation of the heating element does not affect the intensity of the light provided by the light source.

An airfield-lighting system like a taxiway or runway lighting system comprises typically a central-control unit and airfield lights being controlled by the central-control unit. The central-control unit provides power to the airfield lights via a power line, to which airfield lights are typically connected in series via inductive coupling units. The power line provides a constant current. The value of the current can be varied by the central-control unit to vary the emitted luminosity of the airfield lights, which are connected to the power line.

### Summary of the invention

The invention is based on the observation that the power available for an airfield light is limited by the given current of the current source and the maximum al-lowable voltage drop. Thus, the problem to be solved by the invention is to permit a safe operation of airfield lights with a heating device.

Solutions of the problem are described in the independent claims. The dependent claims relate to further improvements of the invention.

The light of the invention comprises at least a housing and a controlling unit, configured for being connected to a current source. The light further comprises at least one LED, which is controlled by the controlling unit. A heating element for heating at least a light exit of the housing is as well provided and controlled by the controlling unit. The controlling unit controls the power provided to the heating element such that the total power consumption of the light is smaller or equal to a power limit. The total power consumption includes at least the power consumption of the LED, of the heating unit and of the controlling unit. Controlling the power consumption permits in any case to avoid exceeding the maximum specified power consumption.

In an embodiment of the invention the controlling unit determines the current provided by the current source. From the provided current the power limit can be derived if the maximum voltage drop at the given current is known. The maximum voltage drop is often a constant.

The heating element and the controlling unit are preferably placed on a common carrier, for example on a common printed circuit board. The common carrier is preferably thermally connected to the housing. This reduces manufacturing costs and enhances the available heating, as the thermal losses of the controlling unit as well heat the housing.

In a further embodiment the controlling unit determines the voltage at the input side of the controlling unit or at the input side of the light and controls the power level of the heating element such that the voltage at the input side is smaller or equal to a voltage limit. The voltage at the input side can be measured at the connectors with the current source and is further referenced to as voltage drop or voltage burden. Monitoring the input voltage permits a simple and effective control mechanism of the total power consumption of the light and ensures that at any current the maximum available power can be used for heating the light.

According to a further embodiment the controlling unit controls a LED driver for providing the LED with a pulse width modulated current. The LED driver is preferably controlled by a microcontroller. This permits to efficiently control the LED current and thus the luminosity emitted by the LED e.g. as a function of the current provided by the current source.

In a further embodiment the controlling unit controls a heating driver for providing the heating element with a pulse width modulated current or voltage. This permits not only to switch the heating element on or off, but to maintain a predefined temperature by adjusting the pulse width.

In an embodiment of the invention is the LED driven by a pulse width modulated signal, provided to LED power switch and the heating element is driven by a pulse width modulated signal, provided to a heater power switch. The controlling unit is in an embodiment of the invention configured for controlling the on times of the heater power switch, to coincide with off-times of the LED power switch. This permits to enhance electromagnetic compatibility.

The controlling unit is preferably connected to a temperature sensor and configured to control a heating driver to provide power to the heating element if the temperature drops below a first temperature T₁ and stops providing power to the heating element, if the temperature is bigger or equal to a second temperature T₂. The heating driver may be a switch. In a preferred embodiment is the heating driver a pulse width modulation circuit, briefly referred to as PWM-driver. Such a PWM driver permits to control the power provided to the heating element, i.e. its power level, almost continuously such that the temperature obtained by the temperature sensor remains at least almost constant. The temperature sensor may be placed close to the light exit of the light.

The light comprises in a further embodiment a humidity sensor for measuring humidity at the surface of the outside of the housing. The humidity sensor is preferably being connected to the controlling unit. Evaluation of the humidity may permit to avoid unnecessary heating of the housing. In a simple embodiment the humidity sensor comprises two isolated electrodes on the surface of the housing. These permit to detect water on the surface of the house by monitoring the resistivity between the electrodes.

The method of the invention permits to manage the power consumption of a light with a heating element, e.g. a light as described above, by controlling the power level of the heating element such that the total power consumption of the light is smaller or equal to a power limit. For example, the method can comprise comparing the current provided by a current source to a current limit and activate the heating element in case the current provided by the current source is bigger as or equal to the current limit and not activating the heating element if the current provided by the current source is smaller as the current limit. This permits very easily to ensure that the total power consumption does not exceed a given power limit.

I an embodiment of the invention the power limit is determined as a function of the current provided by the current source. This permits to raise or lower the power limit in case the current provided by the current source raises or lowers, respectively, and thereby permits to better adapt the heating of the light to the available power.

Raising the power limit if the current provided by the current source raises (and vice versa) can as well be obtained if the method comprises determining the voltage drop and controlling the heating element such that the voltage drop is smaller or equal to a voltage limit.

The LED and the heating element may be driven by pulse width modulation, i.e. the LED is provided with a pulse width modulated current and the heating element is provided with a pulse width modulated current or voltage. The high times of the pulses for modulating the current or voltage provided to the heating element coincide preferably with low times of the pulses for providing a current to the LED. Thereby electromagnetic compatibility can be enhanced.

In a preferred embodiment is the heating element activated as a function of the temperature, to avoid unnecessary heating. This can be obtained by providing power to the heating element if the temperature drops below a first temperature T₁ and to reduce (e.g. to zero) the power provided to the heating element if the temperature is bigger equal to a second temperature T₂.

In a further embodiment of the invention the humidity on the outside surface of the housing is monitored. This may be done by measuring the resistivity between two electrodes. If power for deicing the light is provided to the heating element, the power level can be set to zero or at least reduced, if the humidity drops below a given value during heating. This permits to reduce the total energy consumption of the light. Typically the heating element is powered in case of icing conditions, for example if the temperature drops below a given value, e.g. 0° Celsius. If icing occurred, the ice melts and the melted ice, i.e. water, can be detected by the humidity sensor. With further heating the light may dry and there is no risk of icing again. Thus the power level of the heating element can at least be reduced. If the power level is set to zero, the heating should be powered on again after a given time (if indicated by the housings temperature), to permit the detection of new ice, for example snow that fell in the meantime, by melting the ice and detecting the resulting humidity. If the humidity raises with heating, new icing occurred in the meantime and can preferably be melted by powering the heating element until the humidity drops below a given value.

The temperature of the housing in a region of a light exit is preferably monitored. The power level of the heating element may be controlled such that the temperature of the housing in the region of the light exit remains at a given temperature. This permits to save energy. If the light is switched on after some pause, for example in the morning, it may be at a temperature of about minus 5°Celsius. The heating may be switched on with the maximum available power for deicing the light. By monitoring the temperature of the light in a region of a light exit of the housing one may determine when deicing is accomplished, by a second raise of the monitored temperature. In other words, after switching the heating on, the temperature will rise to some first value of about 0°Celsius and then stay constant until deicing is accomplished. After deicing is accomplished the temperature of the housing raises again. Subsequently the controlling unit may reduce, e.g. set to zero, the power level of the heating element. The controlling unit preferably maintains the temperature at least at the region of the light exit above some threshold avoiding icing, e.g. 1°Celsius. In case of a PWM-driven heating element the duty cycle of the PWM-driver is reduced such that the monitored temperature remains substantially constant at the threshold.

### Description of Drawings

In the following the invention will be described by way of example, without limitation of the general inventive concept, on examples of embodiment with reference to the drawings.
Figure 1 shows a first embodiment of the invention.
Figure 2 shows a second embodiment of the invention.
Figure 3 show a flow diagram of an embodiment of the invention.
Figure 4 shows an example for controlling the power level of an heating element according to an embodiment of the invention.

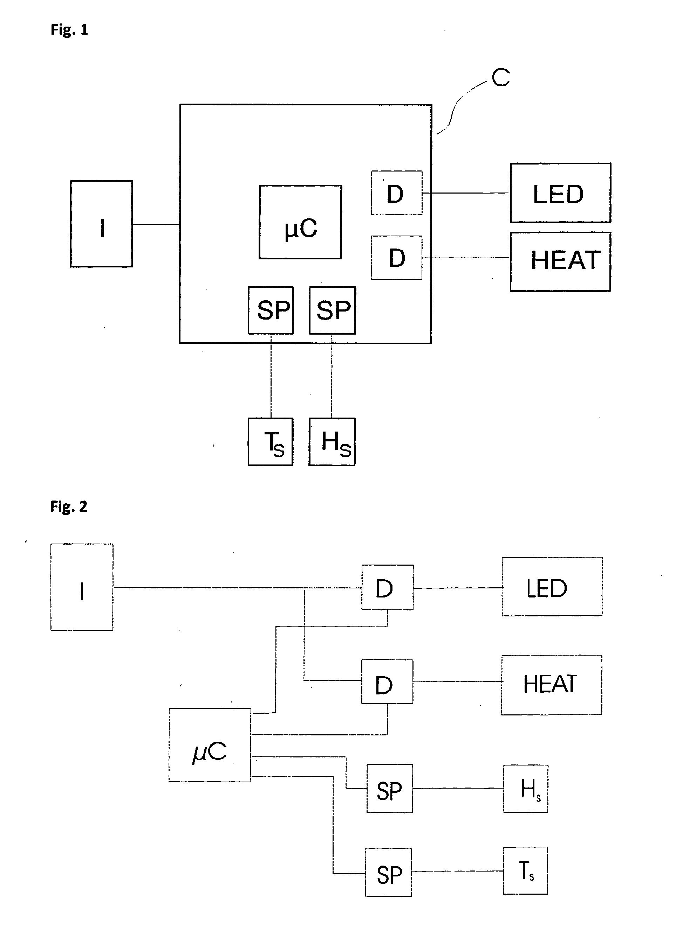

In figure 1 a light with a controlling unit 10, a LED for lighting an airfield and a heating element (HEAT) is depicted. The controlling unit is connected to a current source I, providing a constant current to the controlling unit 10 and thus to the light. The controlling unit 10 further comprises a microcontroller µC, signal processing units SP and drivers D. The signal processing units SP receive signals from sensor elements like a temperature sensor Tₛ or a humidity sensor Hₛ. The temperature sensor Tₛ permits to detect the temperature T of the housing of the light. The humidity sensor Hₛ permits to detect humidity H outside the housing. The drivers drive the LED and the heating element and are controlled by the microcontroller µC. The controlling unit 10 controls the power provided to the heating element such that the total power consumption of the light is smaller or equal to a power limit.

In the embodiment in figure 2 a current source I provides a constant current to the LED light comprising a controlling unit with a microcontroller µC, drivers D for driving a LED or a heating element and signal processing units SP for providing the microcontroller with information about signals provided by sensor elements like a temperature sensor Tₛ or a humidity sensor Hₛ. The LED driver D provides a pulse width modulated LED current to the LED. The pulses for the driver are provided to the driver D by the microcontroller. The power provided to the heating element is as well pulse width modulated by the respective driver D. The pulses for the driver are controlled by the microcontroller.

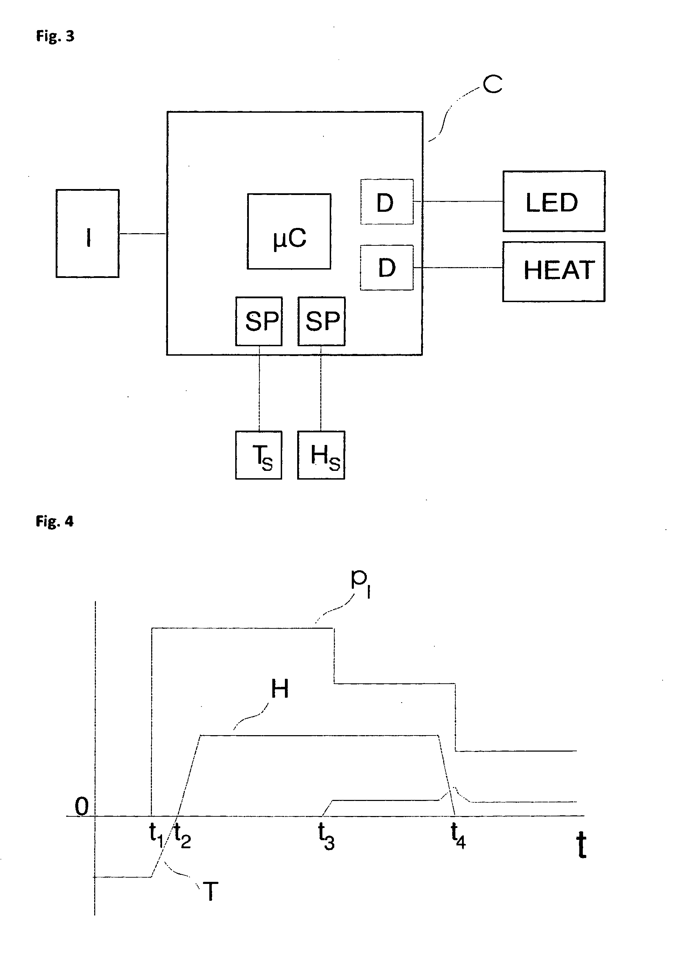

In the embodiment of the invention as depicted in figure 3 the controlling unit determines in step 1 the current provided by the current source I (Fig. 3, Step 1). Based on the current source the LED current is determined and the LED driver D is controlled by microcontroller µC to provide the LED current to the LED (Fig. 3, Step 1). In addition the microcontroller µC determines whether or not heating of the light is required, e.g. whether there is a risk of icing or not. If no heating is required, the controlling unit determines the current provided by the current source. If heating is required the controlling unit 10 determines the maximum power level that can be provided to the heating unit (Fig. 3, Step 4). Subsequently the controlling unit may set the power level of the heating element by controlling heating driver D (Fig. 3, Step 5) to a value smaller or equal to the previously determined maximum power level.

Determining whether heating is required or not may comprise evaluating the temperature T provided by the temperature sensor Tₛ and or the humidity H measured by humidity sensor Hₛ. Heating may in particular be required if the temperature drops below a first threshold T₁. In particular heating may be required, if the temperature drops below a threshold and the humidity value decreases at same time. This indicates a phase change of water on the outside of the housing from liquid to solid and thus icing.

In case the heating is powered on the temperature may rise to a second threshold T₂, remain constant for some time and then rise again. This indicates, that deicing is accomplished. The second threshold T₂ can be determined as an onset of rising humidity as a function of temperature. If deicing is accomplished the controlling unit may decrease the power level of the heating element.

If the detected humidity drops while providing power to the heating element, the housing dries. If the humidity drops below a threshold value, the controlling unit may reduce the power level of the heating element. In a preferred embodiment the power level is reduced only if the temperature is above some temperature limit, this permits to ensure that the humidity reduction is not due to icing.

In Figure 4 an example for controlling the power level of the heating element as a function of temperature T and humidity H is depicted. At to a current is provided to the light. The controlling unit determines a power level for the LED and controls the driver accordingly. The temperature T of the housing is detected as being significantly smaller a first threshold T₁ (e.g. 0°C) and the power level of the heating element is set to maximum allowable value pₘₐₓ. Subsequently (between to and t₁) the temperature raises to about 0°Celsius and snow or ice on the light's housing starts melting, what is reflected in a raising humidity H. The humidity value saturates. After some time (at t₃) the temperature raises again. This indicates that that deicing is accomplished. The power level is reduced to some lower value (but bigger zero), to maintain the light free of ice. The humidity remains saturated. After some more time (at t₄) the temperature T raises again. At the same time the humidity drops. This indicated that the housing dried. The controlling unit further reduces the power level, such that the temperature of the housing remains slightly above 0°C.

### List of reference numerals

- C: controlling unit
- T: Temperature
- H: Humidity
- pₗ: power level of the heating element
- D: driver
- SP: signal processing unit
- Tₛ: temperature sensor
- Hₛ: humidity sensor
- I: current source
- t₁: time of current source on
- t₂: time of reached melting point / detection of humidity
- t₃: time of accomplished deicing / power level reduction
- t₄: time of dried housing / power level reduction

## Claims

1. A light for airfield lighting comprising at least:
- a housing having at least one light exit for light emitted by at least one LED
- at least one heating element for heating at least the light exit,
- a controlling unit (C) configured for being connected to an external current source (I) and being configured for controlling the power level of the LED,
**characterized in that**
said controlling unit (C) is configured for
- determining the current provided by the current source (I) and determining a power limit as a function of the current (I) and a maximum voltage drop,
- controlling the power provided to the heating element such that the total power consumption of the light is smaller or equal to said power limit,
- the controlling unit (C) is configured for controlling a LED driver for providing the LED with a pulse width modulated current,
- the controlling unit (C) controls a heating driver for providing the heating element with a pulse width modulated current or voltage, wherein on times of a heater power switch coincide with off times of a LED power switch.

2. The light of claim 1
**characterized in that**
the controller unit (C) is connected to a temperature sensor (Tₛ) and configured to provide power to the heating element if the temperature (T) drops below a first temperature T₁ and for reducing the power to the heating element, if the temperature is bigger equal to a second temperature T₂.

3. The light of claim 1 or 2, **characterized in that**
the light comprises a humidity sensor (Hₛ) connected to the controlling unit (C) for measuring humidity outside the housing.

4. A method for controlling a light being connected to a current source (I) with at least one LED and at least one heating element,
**characterized in that**
- the power limit is determined as function of the current provided by the current source (I) and a maximum voltage drop,
- the power level of the heating element is controlled such that the total power consumption of the light is smaller or equal to said power limit, by determining the voltage drop at the input side of the light or the controlling unit (C) and controlling the power level of the heating element is such that the voltage drop is smaller or equal to a voltage limit.
- the LED is provided with a pulse width modulated current and the heating element is provided with a pulse width modulated current or voltage, wherein on-times of the pulses for modulating the current or voltage provided to the heating element coincide with off-times of the pulses for providing a current to the LED.

5. The method of claim 4
**characterized in that**,
the power level of the heating element is raised if the temperature (T) drops below a first temperature (T₁) and is reduced if the temperature is bigger equal to a second temperature (T₂).

6. The method of claim 4 or 5
**characterized in that**
humidity (H) on the outside of the light is monitored and the power level is reduced or set to zero, if the humidity (H) drops below a given value.

7. The method of one of claims 4 to 6
**characterized in that**
the temperature (T) of the light in a region of a light exit of a housing of the light is monitored, and that the power supplied to the heating element is controlled such that the temperature (T) of the light in the region of the light exit remains at a given temperature.

## Patentansprüche

1. Eine Leuchte zur Flugfeldbeleuchtung, umfassend mindestens:
- ein Gehäuse mit mindestens einem Lichtauslass für Licht, welches von mindestens einer LED ausgestrahlt wird,
- mindestens ein Heizelement zum Beheizen von zumindest dem Lichtauslass,
- eine Steuereinheit (C), welche dazu ausgelegt ist, mit einer externen Stromquelle (I) verbunden zu werden, und welche dazu ausgelegt ist, den Leistungspegel der LED zu steuern,
**dadurch gekennzeichnet, dass**
die Steuereinheit (C) dazu ausgelegt ist,
- den von der Stromquelle (I) gelieferten Strom zu bestimmen und eine Leistungsgrenze als Funktion des Stroms (I) und eines maximalen Spannungsabfalls zu bestimmen,
- die dem Heizelement zugeführte Leistung derart zu bestimmen, dass die gesamte Leistungsaufnahme der Leuchte kleiner oder gleich dieser Leistungsgrenze ist,
- wobei die Steuereinheit (C) dazu ausgelegt ist, einen LED-Treiber zum Versorgen der LED mit einem pulsbreitenmodulierten Strom zu steuern,
- die Steuereinheit (C) einen Heiztreiber zum Versorgen des Heizelementes mit einem pulsbreitenmodulierten Strom oder einer pulsbreitenmodulierten Spannung steuert, wobei die Einschaltdauern eines Heizleistungsschalters mit den Ausschaltdauern eines LED-Leistungsschalters übereinstimmen.

2. Die Leuchte nach Anspruch 1,
**dadurch gekennzeichnet, dass**
die Steuereinheit (C) mit einem Temperatursensor (Tₛ) verbunden und dazu ausgelegt ist, dem Heizelement Leistung zuzuführen, falls die Temperatur (T) unter eine erste Temperatur T₁ abfällt, und die Leistung zum Heizelement zu verringern falls die Temperatur höher als eine zweite Temperatur T₂ oder dieser gleich ist.

3. Die Leuchte nach Anspruch 1 oder 2, **dadurch gekennzeichnet, dass** die Leuchte einen Feuchtigkeitssensor (Hₛ) umfasst, der mit der Steuereinheit (C) zum Messen der Feuchte außerhalb des Gehäuses verbunden ist.

4. Verfahren zum Steuern einer mit einer Stromquelle (I) verbundenen Leuchte, die mindestens eine LED und mindestens ein Heizelement aufweist,
**dadurch gekennzeichnet, dass**
- die Leistungsgrenze als Funktion des Stromes der von der Stromquelle (I) geliefert wird und einem maximalen Spannungsabfall bestimmt wird,
- der Leistungspegel des Heizelementes in der Weise gesteuert wird, dass die gesamte Leistungsaufnahme der Leuchte kleiner oder gleich der Leistungsgrenze ist, durch Bestimmen des Spannungsabfalls an der Eingangsseite der Leuchte oder der Steuereinheit (C) und Steuern des Leistungspegels des Heizelements in der Weise, dass der Spannungsabfall kleiner oder gleich einer Spannungsgrenze ist,
- die LED mit einem pulsbreitenmodulierten Strom versorgt wird und das Heizelement mit einem pulsbreitenmodulierten Strom oder einer pulsbreitenmodulierten Spannung versorgt wird, wobei die Einschaltdauern der Pulse zum Modulieren des Stroms oder der Spannung, die dem Heizelement zugeführt werden, mit den Ausschaltdauern der Pulse der Stromversorgung zu der LED übereinstimmen.

5. Verfahren nach Anspruch 4,
**dadurch gekennzeichnet, dass**
der Leistungspegel des Heizelements angehoben wird, falls die Temperatur (T) unter eine erste Temperatur (T₁) abfällt, und verringert wird, falls die Temperatur größer als oder gleich wie eine zweite Temperatur (T₂) wird.

6. Verfahren nach Anspruch 4 oder 5,
**dadurch gekennzeichnet, dass**
die Feuchte (H) an der Außenseite der Leuchte überwacht wird und der Leistungspegel verringert oder auf null gestellt wird, falls die Feuchte (H) unterhalb eines vorgegebenen Wertes liegt.

7. Verfahren nach einem der Ansprüche 4 bis 6,
**dadurch gekennzeichnet dass**
die Temperatur (T) der Leuchte in einem Bereich eines Lichtauslasses eines Gehäuses der Leuchte überwacht wird, und dass die dem Heizelement zugeführte Leistung in der Weise gesteuert wird, dass die Temperatur (T) der Leuchte im Bereich des Lichtauslasses bei einer vorgegebenen Temperatur bleibt.

## Revendications

1. Une lumière pour l'éclairage d'un aérodrome comprenant au moins :
- un boîtier ayant au moins une sortie de lumière pour de la lumière émise par au moins une DEL
- au moins un élément de chauffage pour chauffer au moins la sortie de lumière,
- une unité de contrôle (C) configurée pour être connectée à une source de courant externe (I) et étant configurée pour contrôler le niveau de puissance de la DEL,
**caractérisée en ce que**
ladite unité de contrôle (C) est configurée pour
- déterminer le courant fourni par la source de courant (I) et déterminer une limite de puissance comme une fonction du courant (I) et une chute de tension maximum,
- contrôler la puissance fournie à l'élément de chauffage de sorte que la consommation de puissance totale de la lumière soit inférieure ou égale à ladite limite de puissance,
- l'unité de contrôle (C) est configurée pour contrôler un circuit de commande de DEL pour fournir à la DEL un courant modulé en largeur d'impulsion,
- l'unité de contrôle (C) contrôle un dispositif de commande de chauffage pour fournir à l'élément de chauffage un courant ou une tension modulé(e) en largeur d'impulsion,
où lorsque la mise sous tension d'un commutateur de puissance du chauffage coïncide avec la mise hors tension d'un commutateur de puissance DEL.

2. La lumière de la revendication 1
**caractérisée en ce que**
l'unité du contrôleur (C) est connectée à un capteur de température (Tₛ) et configurée pour fournir une puissance à l'élément de chauffage si la température (T) tombe en-dessous d'une première température T₁ et pour réduire la puissance de l'élément de chauffage, si la température est supérieure ou égale à une deuxième température T₂.

3. La lumière de la revendication 1 ou 2, **caractérisée en ce que** la lumière comprend un capteur d'humidité (Hₛ) connecté à l'unité de contrôle (C) pour mesurer l'humidité à l'extérieur du boîtier.

4. Une méthode pour contrôler une lumière étant connectée à une source de courant (I) avec au moins une DEL et au moins un élément de chauffage, **caractérisée en ce que**
- la limite de puissance est déterminée comme fonction du courant fourni par la source de courant (I) et une baisse de tension maximum,
- le niveau de puissance de l'élément de chauffage est contrôlé de sorte que la consommation de puissance totale de la lumière est inférieure ou égale à ladite limite de puissance, en déterminant la baisse de tension sur le côté d'entrée de la lumière ou l'unité de contrôle (C) et contrôler que le niveau de puissance de l'élément de chauffage est tel que la baisse de tension est inférieure ou égale à une limite de tension.
- la DEL est alimentée par un courant modulé en largeur d'impulsion et l'élément de chauffage est alimenté par un courant ou une tension modulé(e) en largeur d'impulsion, où la mise sous tension des impulsions pour moduler le courant ou la tension fournie à l'élément de chauffage coïncide avec la mise hors tension des impulsions pour fournir un courant à la DEL.

5. La méthode de la revendication 4,
**caractérisée en ce que**,
le niveau de puissance de l'élément de chauffage monte si la température (T) tombe en-dessous d'une première température (T₁) et est réduit si la température est supérieure ou égale à une deuxième température (T₂).

6. La méthode de la revendication 4 ou 5
**caractérisée en ce que**
l'humidité (H) sur l'extérieur de la lumière est contrôlée et le niveau de puissance est réduit ou mis à zéro, si l'humidité (H) tombe en-dessous d'une valeur donnée.

7. La méthode de l'une des revendications 4 à 6
**caractérisée en ce que**
la température (T) de la lumière dans une région d'une sortie de lumière d'un boîtier d'une lumière est contrôlée, et **en ce que** la puissance fournie à l'élément de chauffage est contrôlée de sorte que la température (T) de la lumière dans la région de la sortie de lumière reste à une température donnée.
